Europäisches Patentamt

European Patent Office

Office européen des brevets

(11) Publication number: **0 433 930 A1**

## EUROPEAN PATENT APPLICATION

(21) Application number: 90124311.3

(22) Date of filing: 15.12.90

(51) Int. Cl.⁵: **G01L 1/12**

(30) Priority: 19.12.89 SE 8904271

(43) Date of publication of application:
26.06.91 Bulletin 91/26

(84) Designated Contracting States:
DE ES FR GB IT NL

(71) Applicant: **ASEA BROWN BOVERI AB**

S-721 83 Västeras(SE)

(72) Inventor: **Gustafsson, Pär**
**Liljanstorpsvägen 76**
**S-722 46 Västeras(SE)**
Inventor: **Sobel, Jarl**
**Siggesborgsgatan 5 D**
**S-722 26 Västeras(SE)**
Inventor: **örnholmer, Lars**
**Sunnanvindsgatan 16**
**S-723 48 Västeras(SE)**

(74) Representative: **Boecker, Joachim, Dr.-Ing.**
**Rathenauplatz 2-8**
**W-6000 Frankfurt a.M. 1(DE)**

(54) **Magnetoelastic force transducer.**

(57) A magnetoelastic force transducer comprises two closed magnetic circuits. The transducer is constructed in such a way that the reluctance in one of the magnetic circuits (2, 3, 5, 6, 12, 13) will be changed when the transducer is subjected to a force as a result of changes in the magnetic permeability caused by magnetostriction. The second magnetic circuit (3, 4, 5, 7, 11, 14) is formed so as to have an essentially unchanged reluctance when the transducer is subjected to a force and is used to compensate for those changes in the permeability of the material arising for reasons other than magnetostriction.

EP 0 433 930 A1

## MAGNETOELASTIC FORCE TRANSDUCER

The invention relates to a magnetoelastic force transducer according to the precharacterising part of claim 1.

The transducer is primarily designed to measure tensile and/or compressive forces. When only a compressive force is to be measured, the transducer need not be fixedly mounted on the force-absorbing base. The transducer may also be designed so as to obtain a combined measurement of a tensile/compressive force and a torque, for example for measurement on a drilling head.

Utilizing the magnetoelastic effect of a ferromagnetic material for electrical measurement of mechanical forces is an idea that arose more than 50 years ago. However, it was out-competed by strain gauges, except in special applications in heavy industrial environments where the high signal power and the good mechanical properties of the transducer have made the magnetoelastic transducer practically universally prevailing.

These properties, in combination with the possibility of mass-producing simple and inexpensive but still sufficiently accurate magnetoelastic transducers, have opened up a new niche for the magnetoelastic technique.

US-A-1,906,551 entitled "Magnetic testing method and means" describes several basic principles of force measurement utilizing the magnetoelastic effect. It describes, inter alia, the use of separate excitation and measuring windings as well as the use of an unloaded measuring body applied to a differential measurement.

The transducer described in US-A-1,906,551 is a relatively complicated design which is not conceivable for use in simple and robust applications. In addition, the design as such has a number of fundamental deficiencies. For a differential measurement to provide good stability with the aid of an unloaded measuring body, it is required that the measuring body should be as equal to the force-measuring body as possible, both as regards the measuring bodies per se, i.e. material and geometry, and as regards the surrounding magnetic circuits. To obtain good conformity with the temperature, an additional requirement is that there should be very good thermal contact between the two measuring bodies.

US-A-1,906,551 also describes a pressure measuring device comprising a transducer for tension and/or compression. The purpose of this is to generate a tensile stress in one measuring zone in order to obtain a tension signal with inverse sensitivity to the signal from the other measuring zone which is loaded with compressive stress. If, instead of subtracting the signal from an unloaded measuring body, this tension signal is subtracted, an improved sensitivity and improved linearity are theoretically obtained.

With the above-described concept, it has proved that those parts of the transducer for tension and/or compression, which are subjected to compression forces and bending moments, must be made extremely strong in order to obtain, in reality, any significant tensile stress in the measuring zone. This makes the transducer both clumsy and expensive. In addition, the heavy stresses, because of bending in the transducer for tension and/or compression, result in a very unevenly distributed stress around the magnetic circuit, which in turn leads to a deteriorated linearity of the measured signal.

US-A-2,867,118 entitled "Transducer and stress measuring means" describes a magnetoelastic transducer in which two measuring zones made of different materials are loaded to the same stress. One of the materials has positive magnetostriction and the other has negative magnetostriction and, as in other transducers, the difference between the magnetic fluxes in the respective measuring zone is measured.

This solution satisfies the requirement that the transducer shall be simple and inexpensive to manufacture. Since the zones are made of different materials, however, the requirement for good conformity between these cannot sufficiently be fulfilled. This, however, is a necessity in order to obtain good stability according to the above reasoning.

US-A-4,802,368 describes a transducer for tension and/or compression comprising two identical transducer halves which are screwed together in the middle. In addition to what is mentioned in general terms above concerning transducers for tension and/or compression, the force transducer according to the last-mentioned US patent suffers from the additional disadvantage that both the magnetic flux and the mechanical force flux are forced to pass over joints. Since all surfaces are uneven, seen microscopically, the magnetic field will experience different degrees of difficulty in passing the joint at different points of the surface, whereby the good rotational symmetry of the transducer with respect to the magnetic field configuration will be impaired. This reduces the ability of the transducer to suppress lateral forces. In addition, the mechanical stresses arising in the transducer upon loading will be unevenly distributed over the joint, and sliding between the surfaces gives rise to hysteresis of the transducer signal.

The invention aims at developing a magnetoelastic force transducer the output signal of which is highly compensated for influences originating from other sources, for example temperature changes, than magnetostriction. Further the transducer is to exhibit good linearity of its output signal and good resistance to mechanical overload.

To achieve this aim the invention suggests a magnetoelastic force transducer according to the introductory part of claim 1, which is characterized by the features of the characterizing part of claim 1.

Further developments of the invention are characterized by the features of the additional claims.

A magnetoelastic force transducer according to the invention comprises, according to known technique, two closed magnetic circuits which are magnetized by two series-connected excitation windings. The transducer is built up in such a way that the reluctance in one magnetic circuit will be changed when the transducer is subjected to a force as a result of changes in the magnetic permeability caused by magnetostriction. This change in reluctance gives rise to a change in the magnetic flux. The second magnetic circuit is designed so as to have an unchanged or essentially unchanged reluctance when the transducer is subjected to a force and is used in a known manner to compensate for those changes of the permeability of the material which arise for reasons other than magnetostriction.

This compensation is brought about by subtracting the signal which is induced in the measuring winding which senses the flux in the force-independent section from the signal which is induced in the measuring winding which senses the flux which varies with the force. If the permeability and hence the magnetic flux are now changed, for example because of temperature changes, this change will give rise to equally large signal changes in both measuring windings. These changes will not, therefore, contribute to the output signal from the transducer.

In order for this compensation to function satisfactorily, it is necessary for both magnetic circuits to be as identical as possible, both as regards the magnetic material included, the geometrical embodiment and the magnetization, and for the magnetic circuits to be subjected to precisely the same external conditions, for example temperature.

The force transducer according to the invention is formed with a rotationally symmetrical structure since such a structure is easy to manufacture and is well suited for automatic production. A rotationally symmetrical body also gives low sensitivity to lateral forces and bending moments. The force transducer comprises a force-absorbing core provided with three flanges, one at each of the two ends of the core and one at the longitudinal centre of the core. It is thus able to operate as a bobbin for the excitation and measuring windings. The flux closure yokes of the magnetic circuits consist of the mentioned flanges and an outer cylindrical shell. The force-absorbing core which is formed in one piece consists of a relatively thin-walled tubular force-dependent section and a thick-walled tubular force-independent section. The thick-walled tubular section may be replaced by a solid cylindrical section. The transition between these will have a length equal to the thickness of the central flange. It is then important that this transition zone should be kept as short as possible to obtain a small dispersion of the force flux in the thick-walled section. The transition zone can be made with a conical shape or with a different contour. This part of the transducer will henceforth be referred to as a first transition zone.

The thick-walled tubular or solid section has near its outer end a second transition zone towards a terminating zone for the core having dimensions corresponding to the thin-walled tubular section. However, it has been found that it is only important that the outer diameter is reduced to the outer diameter of the thin-walled tube. Also this second transition zone is to be kept as short as possible and corresponds to the thickness of the associated outer flange.

As mentioned, to obtain a good compensation for those changes of the permeability of the material which have occurred for reasons other than magnetostriction, it is important for the magnetic materials included to be as identical as possible. The best identity is obtained by manufacturing the magnetic parts for the most part from one and the same piece. The other parts can be given a low reluctance and hence a small influence on the total reluctance. In this way, the best conformity is also obtained as regards temperature changes. Since the force-absorbing core is made in one piece, a structure without joints in the force flux is obtained. Completely eliminating joints in the magnetic flux path is impossible if the excitation and measuring windings of the transducer are to be capable of being wound in a simple manner.

The force-dependent magnetic circuit has been formed so as to consist partly of a loaded part, i.e. the thin-walled tubular section, where the distribution of stress is as even as possible and free from concentrations, and partly of parts with very low load, comprising flanges and parts of the surrounding shell. In this way, the best linearity and resistance to overload are obtained.

To create the essentially force-independent magnetic circuit, the fact that the flux at high frequencies will be concentrated in a layer joining the surface, because of eddy currents, has been made the starting-point. Therefore, the selection of the supply frequency also forms part of the invention.

This frequency is selected such that the depth of penetration into the magnetoelastic material is smaller than the wall thickness of the thick-walled tubular or solid section of the core. Consequently, only the stress in the surface layer of the thick-walled tubular or solid section contributes to the reluctance. By forming this part of the core as described above, the force flux will for the most part pass in the central part of the thick-walled tubular or solid section. In this way, the force flux can be "screened off" from the surface layer, thus obtaining a considerable reduction of the mechanical stresses in this part of the transducer. However, it should be pointed out that this "screening" does not apply to a possible temperature-changing heat flux which is led in via the same contact points as the force, but this will influence the measuring zones equally. In such a case the two magnetic circuits will not be identical so there must be a certain amount of adjustment of the numbers of turns of the windings.

Within the scope of the invention there are also other embodiments of the core which provide a better identity between the magnetic circuits. However, to a certain extent this is at the expense of higher manufacturing costs and a more uneven mechanical stress distribution. Alternative core designs will be described later in greater detail.

The transducer can be used in a simple manner also for measuring a tensile force by applying the force via, for example, threaded joints at the ends of the transducer, or it can be used as part of an existing structure.

By allowing the described core to form an integral part of a rotating shaft, for example a drilling head, and arranging the excitation and measuring windings on an existing, stationary bobbin, being concentric with the shaft, a signal corresponding to a combination of compressive force and torque can be obtained during drilling.

By way of example, the invention will now be described in greater detail with reference to the accompanying drawings showing in

Figure 1
a cross section of a rotationally symmetrical transducer according to the invention with a force-absorbing core, essentially unloaded parts which close the magnetic circuits, excitation windings and measuring windings,
Figure 2
an alternative way of designing the outer sleeve of the flux closure yokes to additionally reduce the shunt force and hence also the mechanical stresses therein,
Figure 3 and 4
alternative embodiments of the core according to the invention,
Figure 5

an embodiment of a transducer in which the core is separated from the other parts in order to be able to perform axial force measurement in an contactless manner.

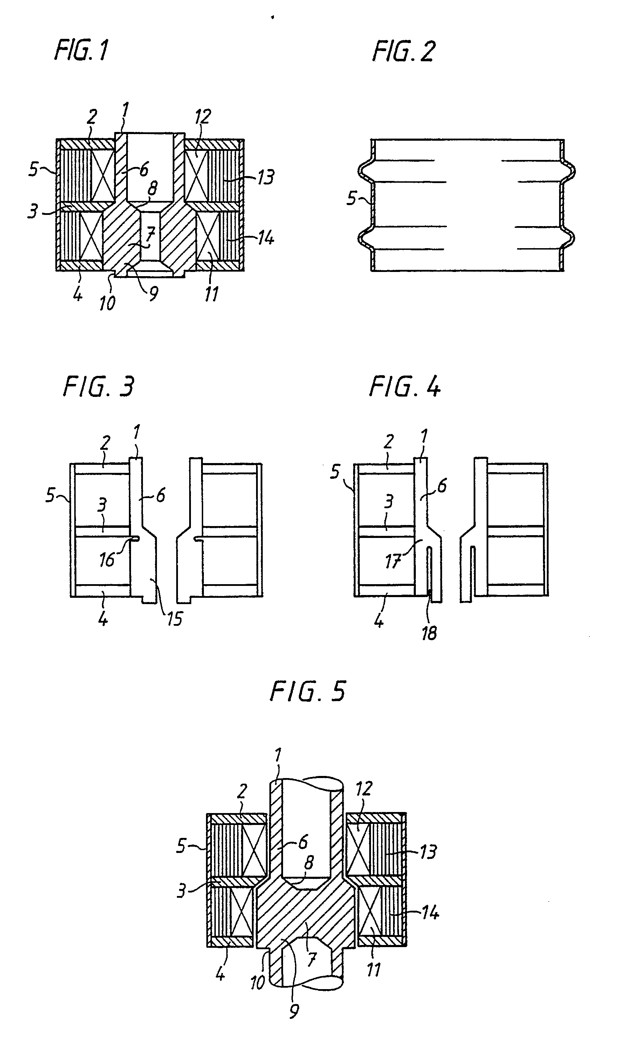

A preferred embodiment of a magnetoelastic force transducer according to the invention is clear from Figure 1 which shows an axial section through the shaft of the transducer. The transducer comprises two magnetic circuits and consists of a force-absorbing core 1, flux closure yokes in the form of a first 2, a second 3 and a third 4 flange and a surrounding sleeve 5. The flanges may constitute integral parts of the core 1, or they may be manufactured as separated parts which can either be welded or glued to the core 1. The surrounding sleeve 5 may be welded or alternatively glued to the flanges after the windings have been mounted. As previously described, the core 1 is formed as a thin-walled force-dependent tubular section 6 and a thick-walled force-independent tubular or solid section 7 with an intermediate first transition zone 8 with an axial length equal to the thickness of the second flange 3. At the other end of the thick-walled or solid section 7 there is a second transition zone 9 with an axial length corresponding to the thickness of flange 4. The core 1 then terminates in a short zone 10 with an outer diameter equal to the outer diameter of the thin-walled tubular section 6. The inner diameter of zone 10 can be selected optionally between the inner diameter of the thin-walled zone and the inner diameter of the thick-walled zone. Also when the force-independent section 7 is formed as a solid body, it is desirable to form the body at its lower end as the described transition zone 9. This leads to the creation of a first measuring zone consisting of the core section 6, the transition zone 8 and the flanges 2 and 3 and the upper part of the sleeve 5, and a second force-independent measuring zone consisting of the core section 7, the transition zones 8 and 9, the flanges 3 and 4 and the lower part of the sleeve 5.

The core 1 and the flux closure yokes can suitably be made of high permeability material to reduce the reluctance in these parts and raise the sensitivity of the transducer. As mentioned, the flanges 2, 3 and 4 can also be manufactured directly from the same piece as the core 1. In the space between the flanges the excitation windings 11 and 12 as well as the measuring windings 13 and 14 have been wound. As will be clear, the core 1 operates as a suitable bobbin.

To obtain low force shunting by the magnetic return conductors, the flanges 2, 3 and 4 should be made thin. In order to further reduce the mechanical stresses in this part, the sleeve 5 may be formed as a bellows according to Figure 2.

Because of the larger cross section area of the thick-walled tubular or solid section 7, the mean stress therein will be lower than in the cross section area of the thin-walled section 6. When the mechanical force penetrates from the thin-walled section 6 into the thick-walled section 7, in accordance with Saint Venant's principle, the "flow lines" of the force flux will diverge towards the envelope surface of the thick-walled or solid section 7, largely at an inclination of 45 degrees. Since this zone does not have sufficient axial length for the stress to be able to spread out into even distribution over the entire cross section, the stress will be weaker and the compressive stress lower at the envelope surface than at the inner surface. Because of the lower mean stress the unevenly distributed compressive stress and the limited depth of the penetration of the generated magnetic field due to the skin effect, the second measuring zone will be essentially force-independent.

The inner and outer diameters, respectively, of the lower force-independent section should be selected such that compressive stresses in the upper part are constant both over the cross section and in the longitudinal direction of the core. This must then be done at the expense of the absolute geometrical identity between the circuits. However, this can be compensated for by adjustment of the numbers of turns of the excitation and measuring windings, respectively, so as to create as equal magnetic conditions as possible for the two magnetic circuits and so that the resultant output signal from the transducer in unloaded state becomes as near to zero as possible.

The magnetization, the measurement of reluctance changes and the processing of measured values are performed in a manner conventional for this type of transducers. By connecting the measuring windings in opposite, a voltage is generated corresponding to the flux difference. This voltage is connected to a phase-sensitive rectifier which in turn is controlled by the phase of the supply signal generator. The high frequencies of the output signal are filtered off in a low-pass filter, thus obtaining a direct voltage proportional to the force which loads the transducer.

Figure 3 shows an embodiment of the core 1 in which the thick-walled tubular or solid section 7 has been replaced by a first tubular section 15 having largely the same inner diameter as the thick-walled tubular or solid section and having largely the same outer diameter as the outer diameter of the thin-walled tubular section 6. This results in greater identity between the two magnetic circuits. By providing an external, narrow radial slot 16 at the transition between the thin-walled section and the tubular section 15, the force flux has been "screened off" from the second magnetic circuit. In this case, however, a certain bending of the force-measuring zone is obtained, with an ensuing more uneven stress distribution. In addition, the overload capacity is reduced because of stress concentrations at the bottom of the radial slot.

An embodiment of the core 1 with a full geometrical identity between the two magnetic circuits is shown in Figure 4. This has been achieved by replacing the thick-walled tubular or solid section 7 by a second tubular section 17 having largely the same inner diameter as the thick-walled tubular or solid section 7 and having largely the same outer diameter as the outer diameter of the thin-walled tubular section 6. By providing a narrow axial slot 18 extending from the free end of the second tubular section 17, which slot has an outer diameter equal to the inner diameter of the thin-walled tubular section 6 and an axial length corresponding to the axial length of the section 7, the surface of that section has been freed from the force flux. However, this concept is more expensive to manufacture than the previous ones, and also in this case it is not possible to obtain a completely evenly distributed stress in the force-measuring section.

Also other similar embodiments of the core are covered by the invention.

Figure 5 shows an embodiment in which the core 1 forms an integral part of, for example, a rotatable drilling head. The force-independent section 7 is here shown as a solid part with the same transition zones 8 and 9 previously described. As will be clear, excitation and measuring windings are housed in an outer stationary bobbin having the same flanges 2, 3 and 4 and shell 5 as in the embodiments described above. Upon loading, the measured signal obtained will constitute a combination of the axial force and the torque to which the transducer section of the spindle is subjected.

## Claims

1. Magnetoelastic force transducer comprising a force-absorbing rotationally symmetrical core (1) of magnetoelastic material provided with two excitation windings (11,12), which are to be supplied with alternating current, two measuring windings (13,14), flux closure yokes in the form of a first (2), a second (3), and a third (4) flange, and a surrounding sleeve (5), **characterized** in that

   the core comprises a thin-walled tubular section (6) and a thick-walled tubular or solid section (7) with an intermediate first transition zone (8) and a second transition zone (9) located at the other end of the thick-walled tubular or solid section, said second zone changing into a short zone (10) with the same outer diameter as the outer diameter of the thin-walled tubular section,

the core comprises a first force-dependent magnetic circuit consisting of the thin-walled tubular section of the core, the first transition zone, the first and second flanges (2,3), that part of the sleeve (5) which extends from the first (2)to the second flange (3), an excitation winding (12) and a measuring winding (13),

the core comprises a second force-independent magnetic circuit consisting of the thick-walled tubular or solid section of the core, the first and second transition zones, the second and third flanges (3,4), the remaining part of the sleeve (5), an excitation winding (11) and a measuring winding (14),

the frequency of the supply voltage is chosen such that the penetration of the magnetic field depth into the magnetoelastic material is much smaller than the wall thickness of the thick-walled tubular or solid section and much smaller than the radius of the force-independent section when this is formed as a solid part, respectively,

the numbers of turns of the excitation windings are adapted such that the magnetic conditions are the same in the two measuring zones,

the measuring windings are connected in opposition, and

the numbers of turns in the measuring windings are adapted such that the output voltage of the transducer amounts to the desired level in the case of an unloaded transducer.

2. Magnetoelastic force transducer according to claim 1, **characterized** in that the thick-walled tubular or solid section (7) of the core (1) is replaced by a first tubular section (15) with the same inner diameter as the thick-walled tubular or solid section and with the same outer diameter as the thin-walled tubular section (6), said first section being provided with an external, narrow radial slot (16) at the transition between the two tubular sections. (Figure 3).

3. Magnetoelastic force transducer according to claim 1, **characterized** in that the thick-walled tubular or solid section (7) of the core (1) is replaced by a second tubular section (17) with the same inner diameter as the thick-walled tubular or solid section and with the same outer diameter as the thin-walled tubular section (6), said second section being provided with a narrow axial slot (18) extending from the free end of the second tubular section, said slot having an outer diameter equal to the inner diameter of the thin-walled tubular section and an axial length corresponding to the axial length of the second tubular section. (Figure 4).

4. Magnetoelastic force transducer according to any of the preceding claims, **characterized** in that the flanges are integrally manufactured from the same piece as the core.

5. Magnetoelastic force transducer according to any of claims 1 to 3, **characterized** in that the flanges are welded or glued to the core.

6. Magnetoelastic force transducer according to any of the preceding claims, **characterized** in that the sleeve is welded or glued to the flanges.

7. Magnetoelastic force transducer according to any of the preceding claims, **characterized** in that the sleeve is arranged as a bellows in such a way that the compressibility of the sleeve in the axial direction is increased to a certain extent. (Figure 2).

8. Magnetoelastic force transducer according to claim 1, **characterized** in that the core is separated from the flanges, sleeve and windings such as to make possible contactless axial force measurement of freestanding shafts. (Figure 5).

FIG.1

FIG. 2

FIG. 3

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.⁵) |
|---|---|---|---|
| A | US-A- 4 802 368 (J.O. NORDVALL) *Abstract, figures 1-5 cited in the application* | 1 | G 01 L 1/12 |

TECHNICAL FIELDS SEARCHED (Int. Cl.⁵)

G 01 B
G 01 L

The present search report has been drawn up for all claims

| Place of search | Date of completion of the search | Examiner |
|---|---|---|
| STOCKHOLM | 14-03-1991 | L. JAKOBSSON |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82